(19) **Europäisches Patentamt**

**European Patent Office**

**Office européen des brevets**

(11) **EP 0 696 502 B1**

(12) **EUROPEAN PATENT SPECIFICATION**

(45) Date of publication and mention
of the grant of the patent:
**28.02.2001 Bulletin 2001/09**

(51) Int Cl.[7]: **B32B 27/36**, C08J 7/04,
B29C 55/12

(21) Application number: **94923060.1**

(22) Date of filing: **03.08.1994**

(86) International application number:
**PCT/JP94/01276**

(87) International publication number:
**WO 95/13188 (18.05.1995 Gazette 1995/21)**

(54) **READILY BONDABLE POLYESTER FILM**

LEICHT HAFTBARER POLYESTERFILM

FEUILLE POLYESTER FACILE A COLLER

(84) Designated Contracting States:
**DE FR GB**

(30) Priority: **09.11.1993 JP 27984093**
**29.03.1994 JP 5926394**

(43) Date of publication of application:
**14.02.1996 Bulletin 1996/07**

(73) Proprietor: **TORAY INDUSTRIES, INC.**
**Tokyo 103-8666 (JP)**

(72) Inventors:
• **HIRATA, Jun**
  **Shiga 524 (JP)**
• **SHIMIZU, Yazo**
  **Suntou-gun Shizuoka 411 (JP)**
• **MIMURA, Takashi**
  **Shiga 520 (JP)**
• **AONO, Shouji**
  **Mishima-shi Shizuoka 411 (JP)**
• **SUZUKI, Masaru**
  **Shizuoka 414 (JP)**

(74) Representative: **Coleiro, Raymond et al**
**MEWBURN ELLIS**
**York House**
**23 Kingsway**
**London WC2B 6HP (GB)**

(56) References cited:
**EP-A- 0 188 620**     **EP-A- 0 504 522**
**EP-A- 0 554 654**     **JP-A- 2 229 838**
**JP-A- 5 287 099**     **JP-A- 60 228 149**
**US-A- 3 136 655**

• **DATABASE WPI Week 8601, Derwent**
  **Publications Ltd., London, GB; Class A23, AN**
  **86-002985 & JP 60 228 149 A (TORAY IND INC)**

**Description**

TECHNICAL FIELD

The present invention relates to a polyester film having good adhesiveness. More particularly, the present invention relates to a polyester film having good adhesiveness, which is excellent in anti-static property, slipperiness, adhesiveness, anti-blocking property, shaving resistance, solvent resistance and the like, which is suitably used as a base film of magnetic recording media, various photograph materials, wrapping materials, electric insulating materials, general industrial materials and the'like, especially suited as a base film of magnetic recording media.

BACKGROUND ART

Polyesters, particularly polyethylene terephthalates, polybutylene terephthalates, polyethylene naphthalates and poly-1,4-cyclohexanedimethylene terephthalates, as well as polyesters comprising the above-mentioned polyesters as major component, have excellent physical and chemical properties, so that they are widely used as fibers, films, sheets and molded articles. Especially, since polyester films have excellent heat resistance, chemical resistance and mechanical properties, so that they are widely used as materials for magnetic recording media, various photograph materials, wrapping materials, electric insulating materials, general industrial materials and the like.

In these uses, the films are not used alone, but the surfaces of the films are covered or coated with various materials such as magnetic coating materials, chemical mat coating materials, diazo photosensitive coating materials, gelatin compositions, heat-seal property-giving materials and inks.

For the films used in magnetic tapes and floppy disks, for the sake of high reliability and high density, flatness and slipperiness are demanded, as well as good adhesion between the magnetic coating and the base film is strongly demanded. However, if adhesiveness of the base film with the magnetic coating is increased, blocking between the films occurs, so that efficiency of various operations and magnetic recording properties are deteriorated. On the other hand, in the process of producing magnetic recording tapes using a base film or a film having good adhesiveness, when the film is passed through various rolls rotating at high speed, the film is charged by the friction between the roll and the film or between the films, so that the machine has to be often stopped in order to prevent explosion. As a result, the operation efficiency is decreased and the magnetic recording properties may be deteriorated. Thus, in order to give adhesiveness to the film, it is also necessary to simultaneously satisfy the anti-static property, slipperiness, anti-blocking property, shaving resistance and the like. In addition, a substance for giving good adhesiveness which is resistant to various solvents contained in various coatings which are coated or printed on the film surface is demanded.

However, in general, polyesters *per se* are inactive and have poor adhesiveness. Thus, when polyester films are coated or printed with various coatings such as, for example, magnetic coatings, chemical mat coatings, diazo photosensitive coatings, gelatin compositions, heat-seal property-giving compositions, inks and the like, measures for improving adhesion between the film and the coatings is adopted. Known methods f6r improving adhesion between the film and the coatings include physical treatments such as applying corona discharge treatment or plasma treatment to the film surface; chemical methods such as treatment of the film surface with an alkali or an amine; and methods in which a substance having good adhesiveness is coated. However, the above-mentioned physical and chemical surface treatments not only make the process complex and increase the cost, but also sufficient adhesiveness is not obtained.

On the other hand, the method in which a substance having good adhesiveness is coated can be performed within the production process of polyester film so that the cost is low and an appropriate substance having good adhesiveness may be selected for each of various coating materials. It has been proposed to laminate or coat various water-dispersible and water-soluble copolymerized polyesters on the polyester base film. For example, as disclosed in Japanese Laid-open Patent Application (Kokai) No. 50-39375 and Japanese Patent Publication (Kokoku) Nos. 58-12151 and 59-9348, polyester films comprising a water-soluble or water-dispersible copolymerized polyester containing polyethylene glycol, which is laminated or coated on a polyester base film have been used. A film on which a mixture of a water-soluble copolymerized polyester and a higher fatty acid wax is coated is also known, as disclosed in Japanese Patent Publication (Kokoku) No. 64-10189. Further, as disclosed in Japanese Laid-open Patent Application (Kokai) No. 4-126293, it is known to laminate an oxidized wax and a rosin-modified wax on a polyester base film, thereby preventing sticking.

However, with the films disclosed in Japanese Laid-open Patent Application (Kokai) No. 50-39375 and Japanese Patent Publication (Kokoku) Nos. 58-12151 and 59-9348, the water-solubility of the copolymerized polyester polymer is poor, and although the copolymerized polyester exhibits adhesiveness when laminated or coated on a polyester base film, the slipperiness, anti-static property and anti-blocking property of the film are poor. The film disclosed in Japanese Patent Publication (Kokoku) No. 64-10189 has a drawback in that the anti-static property and slipperiness are poor. The film disclosed in Japanese Laid-open Patent Application (Kokai) No. 4-126293 has excellent anti-sticking property, but antistatic property, adhesiveness, slipperiness, shaving resistance and solvent resistance, of which promotion being the object of the present invention, are not exerted at all.

JP-A-60 228149 discloses a laminate polyester film comprising a core polyester layer and a higher fatty acid wax-containing polyester layer laminated on a surface of the core layer. The content of the higher fatty acid wax in the layer is 0.01-1 wt%.

EP-A-188 620 discloses a polyester film comprising (i) a polyester base film, and (ii) a coating layer formed on one surface of the base film, the coating layer comprising a mixture of (a) 0.1-30 wt% of a higher fatty acid wax, and (b) 70-99.9 wt% of a copolyester which includes as one comonomer component an alkali metal salt of an aromatic sulfonic acid in an amount of 7-40 mol % with respect to the copolymerised acid component.

EP-A-554 654 discloses an oriented polyester film and a coating layer formed on at least one surface of the film, wherein the coating layer contains at least 50 wt% of a water-soluble or water-dispersible polyester resin.

## DISCLOSURE OF THE INVENTION

An object of the present invention is to overcome the above-mentioned drawbacks in the prior art and to provide a polyester film in which the copolymerized polyester has an excellent water solubility and which is excellent in anti-static property, adhesiveness, slipperiness, anti-blocking property, shaving resistance, solvent resistance and the like.

That is, the present invention provides a polyester film having good adhesiveness as defined in claim 1.

The polyester film according to the present invention is excellent in anti-static property, adhesiveness, slipperiness, anti-blocking property, shaving resistance, solvent resistance and the like, so that film-forming property and processability of the film as well as various characteristics of the obtained products are promoted.

## BEST MODE FOR CARRYING OUT THE INVENTION

The copolymerized polyester employed in the present invention may be any copolymerized polyester as long as it contains a polyoxyalkylene glycol component in an amount of not less than 1% by weight and less than 40% by weight. However, aqueous copolymerized polyesters are preferred and water-soluble copolymerized polyesters and water-dispersible copolymerized polyesters are best preferred. In view of anti-static property, anti-blocking property and solvent resistance, the acid component of the aqueous copolymerized polyester preferably contains not less than 60 mol%, more preferably not less than 70 mol%, still more preferably not less than 80 mol% of an aromatic dicarboxylic acid. If the content of the aromatic dicarboxylic acid is less than 60 mol%, the anti-static property, anti-blocking property and solvent resistance are poor. The aromatic dicarboxylic acid is not restricted and examples thereof include terephthalic acid, isophthalic acid and diphenylether dicarboxylic acids. Among these, preferred aromatic dicarboxylic acids are terephthalic acid, isophthalic acid and naphthalene dicarboxylic acid.

To give water-solubility, it is a requirement of the present invention to add to the copolymerized polyester an ester-forming alkaline metal sulfonate compound as an acid component in an amount of 5 - 40 mol%, preferably 7 - 30 mol%, still more preferably 10 - 20 mol%, most preferably 11 - 15 mol%. If the content of the ester-forming alkaline metal sulfonate compound is less than 5 mol%, it is difficult to attain sufficient water-solubility and adhesiveness. On the other hand, if the content thereof is more than 40 mol%, the adhesiveness reaches plateau and anti-static property, anti-blocking property and solvent resistance are deteriorated. The ester-forming alkaline metal sulfonate is not restricted, and examples thereof include aromatic dicarboxylic acids having alkaline metal sulfonate, such as alkaline metal salts of sulfoterephthalic acid, 5-sulfoisophthalic acid, 2-sulfoisophthalic acid, 4-sulfoisophthalic acid, 4-sulfonaphthalene-2,6-dicarboxylic acid. Among these, lithium, sodium and potassium salts of 5-sulfoisophthalic acid and sulfoterephthalic acid are preferred.

The glycol component (excluding the polyoxyalkylene glycol described below) of the copolymerized polyester employed in the present invention preferably consists essentially of 1-20 mol% of ethylene glycol oligomer and preferably 80 - 99 mol% of $C_2$-$C_8$ aliphatic glycol and/or $C_6$-$C_{16}$ alicyclic glycol, more preferably 82 - 95 mol% of the latter and 3 - 18 mol% of the former, still more preferably 84 - 93 mol% of the latter and 6 - 15 mol% of the former.

If the $C_2$-$C_8$ aliphatic glycol and/or $C_6$-$C_{16}$ alicyclic glycol is less than 80 mol% or the ethylene glycol oligomer is more than 20 mol%, anti-blocking property, slipperiness, solvent resistance and the like may be deteriorated, so that it is not preferred. On the other hand, if the $C_2$-$C_8$ aliphatic glycol and/or $C_6$-$C_{16}$ alicyclic glycol is more than 99 mol% or the ethylene glycol oligomer is less than 1 mol%, although the anti-blocking property is good, water-solubility and adhesiveness are deteriorated.

Examples of the $C_2$-$C_8$ aliphatic glycol and/or $C_6$-$C_{16}$ alicyclic glycol include ethylene glycol, 1,2-propanediol, 1,3-propanediol, neopentyl glycol, 1,3-butanediol, 1,4-butanediol, 1,5-pentanediol, 1,6-hexanediol, 1,2-cyclohexanedimethanol, 1,3-cyclohexanedimethanol, 1,4-cyclohexanedimethanol and the like. Preferred $C_2$-$C_8$ aliphatic glycol and/or $C_6$-$C_{16}$ alicyclic glycol are ethylene glycol, neopentyl glycol, 1,4-butanediol and 1,4-cyclohexanedimethanol. These glycols may be employed individually or in combination.

The ethylene glycol oligomer employed in the present invention is the ethylene glycol oligomer represented by the formula (2) below. In formula (2), n is preferably 2 - 5, and most preferably 2 (diethylene glycol). These ethylene glycol oligomers may be employed individually or in combination.

$$HO(CH_2CH_2O)_nH \tag{2}$$

(wherein n is 2 - 8)

The above-described ethylene glycol oligomer such as diethylene glycol includes ethylene glycol oligomers such as diethylene glycol produced as a byproduct in the process of producing a polyester using ethylene glycol as the glycol component.

The copolymerized polyester employed in the present invention may contain, in addition to the above-mentioned acid components and glycol components, an aliphatic dicarboxylic acid, oxy acid, monofunctional compound and polyfunctional (not less than trifunctional) compounds in an amount not adversely affecting the effects of the present invention. Although'the contents of these components are not restricted as long as the effects of the present invention are not adversely affected, the contents are usually about not more than 30 mol%.

The copolymerized polyester employed in the present invention may be produced by a known optional process as long as the above-mentioned components are used. A process for producing a copolymerized polyester using terephthalic acid and 5-sodium sulfoisophthalic acid as acid components and ethylene glycol and diethylene glycol as glycol components will now be described as an example. In this case, the copolymerized polyester may be prepared by directly reacting terephthalic acid, 5-sodium sulfoisophthalic acid, and ethylene glycol, diethylene glycol, thereby carrying out esterification reaction. Alternatively, the copolymerized polyester may be produced by a process comprising the first step in which an alkyl ester of terephthalic acid and an alkyl ester of 5-sodium sulfoisophthalic acid are reacted with ethylene glycol and diethylene glycol, thereby carrying out ester-exchange reaction; and a second step in which the reaction product of the first step is polycondensed. In this case, as a reaction catalyst, the known catalysts such as alkaline metal compounds, alkaline earth metal compounds, manganese compounds, cobalt compounds, zinc compounds, antimony compounds, germanium compounds and titanium compounds may be employed. Further, phosphorus compounds may be used as an agent for preventing coloring.

It is necessary that the copolymerized polyester contain a polyoxyalkylene glycol in an amount of not less than 1% by weight and less than 40% by weight, preferably in an amount of 10 - 30% by weight, more preferably 15 - 25% by weight. Water-soluble copolymerized polyesters usually contain an ester-forming alkaline metal sulfonate as a copolymerization component in order to give water-solubility. Since sulfonate groups increase negative charge in frictional charging, polyester films having good adhesiveness comprising the laminated copolymerized polyester exhibit strong negative charge in the normal charging by peeling and charging by the process employing a number of silicone rolls. After intensive study, the present inventors discovered that this negative charge can be neutralized by introducing polyether chains which are in the more positive side than polyethylene terephthalate in charging series, because the polyoxyalkylene glycol positively charge the polyester in the frictional charging and process charging, and that the content of the polyoxyalkylene glycol is not less than 1% by weight and less than 40% by weight.

The relationship between the content of the polyoxyalkylene glycol component and the frictional charging has a relative maximum, and if the content of the polyoxyalkylene glycol is less than 1% by weight, sufficient anti-static property cannot be obtained. On the other hand, if the content of the polyoxyalkylene glycol is more than 40% by weight, the anti-static property is deteriorated as well as slipperiness and anti-blocking property are deteriorated, so that it is not preferred. Although the type of polyoxyalkylene glycol is not restricted, in order to simultaneously attain excellent adhesiveness water-solubility and anti-static property, it is a requirement of the present invention that the number average molecular weight of the polyoxyalkylene glycol component is 400 - 10,000, more preferably 500 - 6000, still more preferably 600 - 4000. Examples of the polyoxyalkylene glycol component includes polyethylene glycol, polypropylene glycol, polytetramethylene glycol and the like. Among these, in view of water-solubility, anti-static property and adhesiveness, polyethylene glycol is preferred.

In the present invention, it is preferred that the relationship between the content (A% by weight) of the polyoxyalkylene glycol and the content (B mol%) of the ethylene glycol oligomer in the copolymerized polyester satisfy the relationship of $1 \leq A/B \leq 10$, more preferably $2 \leq A/B \leq 7$, still more preferably $3 \leq A/B \leq 5$. If A/B is less than 1, the anti-static property is poor and if it is more than 10, the water solubility is poor, so that it is not preferred.

In general, if polyoxyalkylene glycol is contained in a large amount in order to positively charge the copolymerized polyester, the water-solubility is decreased. By intensively studying the anti-static property of the film having good adhesiveness in the frictional charging, it was discovered that the ethylene glycol oligomer content in the copolymerized polyester is closely related to the solubility, and that the more the content of the ethylene glycol oligomer, the higher the solubility. It is presumed that although the water-solubility of the copolymerized polyester containing polyoxyalkylene glycol is decreased by the crystallinity of the polyoxyalkylene glycol, the solubility can be increased by increasing the content of ethylene glycol oligomer by virtue of the amorphous nature of the oligomer. Therefore, the amount of polyoxyalkylene glycol may be increased, so that anti-static property can be promoted.

The method for incorporating the polyoxyalkylene glycol component in the copolymerized polyester is not restricted and includes a method in which the polyoxyalkylene glycol component is added in an optional step during the production process of the copolymerized polyester; and a method in which the copolymerized polyester and the polyoxyalkylene glycol component are kneaded in a melted condition in an extruder or the like. In such cases, the polyoxyalkylene glycol component may be added in the form of powder, melt or solution.

A part or all of the polyoxyalkylene glycol incorporated in the copolymerized polyester as mentioned above is incorporated into the molecular chains of the copolymerized polyester and the remainder remains non-reacted. In the present invention, unless otherwise apparent from the context, it is intended that the term "copolymerized polyester" includes such non-reacted polyoxyalkylene glycol, and that the term "polyoxyalkylene glycol" includes not only that contained in the molecular chains of the copolymerized polyester but also the non-reacted, free polyoxyalkylene glycol. Thus, with respect to the content of the polyoxyalkylene glycol in the copolymerized polyester and with respect to the above-mentioned ratio thereof to the ethylene glycol oligomer, the amount of the non-reacted polyoxyalkylene glycol which exists, if any, is also included in the amount of the "copolymerized polyester" and in the amount of the "polyoxyalkylene glycol".

Although the intrinsic viscosity of the copolymerized polyester employed in the present invention is not restricted, in view of adhesiveness, it is preferably not less than 0.3 dl/g, more preferably not less than 0.4 dl/g.

As required, to the copolymerized polyester, a fire retardant, thermal stabilizer, UV absorber, pigment, dye, aliphatic acid ester, an organic lubricant such as a wax, a defoaming agent such as polysiloxane may be added. Further, in order to promote slipperiness, inorganic particles such as particles of clay, mica, titanium oxide, calcium carbonate, kaolin, wet or dry silica, colloidal silica, calcium phosphate, barium sulfate or alumina, or organic particles such as particles of acrylic acids or styrene may be added.

As the copolymerized polyester which is laminated on the polyester film in the present invention, aqueous copolymerized polyesters, especially water-soluble or water-dispersible copolymerized polyesters are preferred. The copolymerized polyester employed in the present invention is used in the form of an aqueous solution after being dissolved in water or used in the form of an aqueous dispersion. The term "aqueous solution" does not have a strict meaning in the field of physics or chemistry, but includes the state in which a part of the copolymerized polyester is finely dispersed.

In the present specification and claims, the term "wax" in the term "oxidized wax" means esters constituted by a higher fatty acid and a higher monoalcohol, and the term "oxidized wax" means waxes in which an oxygen-containing group such as carboxyl group or hydroxyl group is introduced by oxidizing the ethylene chain moiety of the wax by, for example, oxidation in the air. Examples of the oxidized wax include hydrocarbon waxes containing carboxyl groups formed by oxidation with oxygen, oxidized polyethylene waxes obtained by oxidizing a polyethylene wax with oxygen, mixtures thereof and partially oxidized waxes. Although the molecular weight, melting point and the like of the oxidized wax are not restricted, those having a molecular weight of not less than 1000 are preferred. Although the upper limit of the molecular weight is not restricted, the upper limit is usually about 500,000.

The term "natural wax" means waxes originated from animals and plants. In addition to the esters constituted by a higher fatty acid and a higher monoalcohol, those which are usually called "wax", such as Japan wax are also included. Examples of the natural wax include candelilla wax, carnauba wax, Japan wax, Oricury wax, sugar cane wax and the like. In the present invention, carnauba wax is especially preferred.

In the present invention, by adding the oxidized wax and/or natural wax, slipperiness and anti-blocking property are largely improved.

The oxidized wax and the natural wax may be added to the copolymerized polyester individually or in combination. The oxidized wax and/or natural wax may further contain a rosin-modified wax. The rosin-modified wax is not restricted and it is especially preferred to use an ester adduct of the following compound: That is, (rosin or disproportionated rosin, or hydrogenated rosin· $\alpha$,$\beta$-substituted ethylene ($\alpha$ substituent: carboxyl, $\beta$ substituent: hydrogen, methyl or carboxyl)adduct}·alkyl or alkenyl ($C_1$-$C_8$ respectively) poly(number of repeating units: 1-6) alcohol.

Although the mixing ratio of the oxidized wax and/or natural wax (A) to the rosin-modified wax (B) is not restricted, (A)/(B) is preferably 10/90 - 90/10, more preferably 20/80 - 80/20, still more preferably 30/70 - 70/30. The mixing ratio (A)/(B) is preferably not more than 90/10 because uniform dispersion may be attained when the wax is emulsified or suspended in water so that a uniform coating layer may be obtained. The mixing ratio (A)/(B) is preferably not less than 10/90 because the slipperiness after coating is good.

Although the mechanism of giving slipperiness and anti-blocking property by the oxidized wax and/or natural wax has not been sufficiently clarified, it is presumably because the wax employed in the present invention, especially, the oxidized wax has a large dispersion force component of surface free energy and a small polar force component, and this is true even in the mixture with the copolymerized polyester. To the above-mentioned wax, various additives may be added in an amount not adversely affecting the effects of the present invention. Examples of such additives include anti-static agents, thermal stabilizers, anti-oxidants, organic and inorganic particles, pigments and the like.

The layer (coating layer) formed on the polyester base film in the present invention comprises as major component a mixture of the above-mentioned copolymerized polyester, and the above-mentioned oxidized wax alone or the above-mentioned natural wax alone or combination of these waxes. The term "major component" means that the mixture of the copolymerized polyester and the wax(es) is contained in the layer (coating layer) formed on the polyester base film in an amount of not less than 80% by weight, preferably not less than 90% by weight based on the weight of the layer.

The ratio of the copolymerized polyester to the wax in the layer (coating layer) formed on the polyester base film is such that the content of the copolymerized polyester is 70 - 99.9% by weight, preferably 85 - 99% by weight, and the content of the wax(es) is 30 - 0.1% by weight, preferably 15 - 1% by weight. If the content of the copolymerized polyester is not more than 70% by weight, adhesiveness is poor, so that it is not preferred. On the other hand, if the content of the copolymerized polyester is-not less than 99.9% by weight, slipperiness and anti-blocking property are poor, so that it is not preferred. If the mixing ratio of the copolymerized polyester and the wax(es) is within the above-mentioned range, good anti-static property, slipperiness, adhesiveness and anti-blocking property are simultaneously satisfied, so that it is preferred. In the coating layer, a known cross-linking agent such as silane coupling agent may be added. Although the thickness of the layer (coating layer) formed on the polyester base film is not restricted, the thickness is preferably 0.001 - 1 μm, more preferably 0.01 - 0.2 μm.

The polyester film employed in the present invention may preferably be a polyester film prepared by a well-known method, that is, by extruding a melted polyester in the form of a sheet and stretching the sheet in at least one direction. As for the mechanical properties of the film, the film may preferably be of a normal balanced type, the type which is strengthened along one direction, or the type which is strengthened along two directions. The surface of the polyester is preferably smooth. More particularly, the surface roughness Ra of the film is preferably within the range of 0.003 - 0.030 μm, which is measured by a pin touch type surface roughness meter with a cut off value of 0.08 mm.

The Ra value is the arithmetic average of absolute values of the height (depth) of the surface roughness curve from the centerline (the centerline is determined such that the area above the centerline is equal to the area below the centerline), which surface roughness curve is obtained by removing undulation by using an appropriate cut off value (according to JIS-B-0601, DIN 4768, ASA B46.1).

The polyester constituting the polyester base film may be a polyester constituting an ordinary polyester film. As its acid component, the aromatic carboxylic acids described above for the copolymerized polyester are preferred, and as its glycol component, the aliphatic or alicyclic glycols described above for the copolymerized polyester are preferred. The polyester may be either a homopolyester or a copolyester. In case of a copolyester, examples of the copolymerized component include diol components such as diethylene glycol, propylene glycol, neopentyl glycol, polyethylene glycol, p-xylylene glycol and 1,4-cyclohexanedimethanol; dicarboxylic acid components such as adipic acid, sebacic acid, phthalic acid, isophthalic acid, 2,6-naphthalene dicarboxylic acid and 5-sodium sulfoisophthalic acid; polyfunctional carboxylic acid components such as trimellitic acid and pyromellitic acid; and p-oxyethoxy benzoic acid. In case of a copolymer, the amount of the copolymerized component is preferably not more than 20 mol%.

A preferred example of a process for producing the film according to the present invention will now be described. However, the production process is not restricted thereto. A crystalline polyethylene terephthalate material which is substantially non-oriented is dried according to a conventional method and melted at 280°C - 290°C. The melt is extruded into a form of a sheet and the sheet is cooled to solidify on a casting drum at 20 - 30°C, thereby obtaining a non-oriented sheet. This sheet is heated at 80 - 120°C and stretched in the longitudinal direction at a stretching ratio of 2.0 - 5.0 times the original length to obtain a uniaxially oriented film. One of the surfaces of this film is subjected to corona discharge treatment and an aqueous coating liquid containing the above-described copolymerized polyester and the wax(es), which is diluted with water to a prescribed concentration, is applied to the treated surface. The thus coated film is then stretched in the transverse direction while heating the film at 90 - 140°C at a stretching ratio of 2.5 - 5.0 times the original length. The obtained film is then introduced into a heat set zone at 160 - 240°C and heat set for 1 - 10 seconds. During this heat set treatment, relaxation in the transverse direction by 3 - 12% may be allowed, as required. The biaxial stretching may be performed by sequential stretching in the longitudinal and transverse directions or by simultaneous biaxial stretching. Although the stretching ratio is not restricted, usually, it is preferably 2.0 - 5.0 times the original length in both directions. After stretching in the longitudinal and transverse directions, the film may be restretched in either longitudinal or transverse direction. Although the thickness of the polyester film is not restricted, the thickness is preferably 2 - 200 μm.

As for the method of laminating the layer giving good adhesiveness, the method in which the layer is coated during the production process of the polyester film and the layer is stretched together with the base film is best preferred. For example, a melt-extruded polyester film before crystalline orientation is stretched in the longitudinal direction at a stretching ratio of 2.5 - 5 times the original length, corona discharge treatment is continuously performed on the surface to be coated, and the coating liquid is coated on the treated surface. The coated film is dried during passing a serially heated zone and then stretched in the transverse direction at a stretching ratio of 2.5 - 5 times the original length. The film is then continuously introduced into a heating zone at 150 - 250°C, thereby completing the crystalline orientation. The coating liquid used herein is preferably aqueous in view of pollution of environment and anti-explosion.

The method of coating on the base film may be carried out by a known coating method such as reverse coating method, gravure coating method, die coating method or wire bar coating method. In the above-described layer for giving good adhesiveness (coated layer), known additives such as thermal stabilizers, anti-oxidants, weathering agents, UV absorbers, organic lubricants, pigments, dyes, organic or inorganic fine particles, fillers, anti-static agents and nucleating agents may be added in an amount not adversely affecting the effects of the present invention.

The coating composition preferably contains the water-soluble copolymerized copolymer in an amount of about 0.5 - 10% by weight in water. The water-soluble copolymerized polyester coating composition may be prepared by, for example, adding the water-soluble copolymerized polyester to warm water at 60 - 80°C and stirring the mixture. The wax coating composition preferably contains the wax(es) in an amount of 1 - 30% by weight in water. Addition of a nonionic surfactant, phosphate, ammonium oleate, 2-amino-2-methylpropanol or the like in an amount of about 1% by weight is preferred since the dispersion of the wax(es) in water is promoted. It is preferred to apply the above-mentioned water-soluble copolymerized polyester coating composition and the wax coating composition to the polyester film after mixing.

In the above-described embodiment, the polyester base film on which the layer for giving good adhesiveness is to be coated may also contain the polymer in which the compound having sulfonic acid and/or the salt thereof is copolymerized, polyethylene glycol and the oxidized wax and/or natural wax. By this, the slipperiness, anti-blocking property and adhesiveness of the coating layer and the base film are promoted. In cases where the polymer in which the compound having sulfonic acid and/or the salt thereof is copolymerized, polyethylene glycol and the oxidized wax and/or natural wax are incorporated, the amount thereof may preferably be not less than 5 ppm and less than 20% by weight in view of improvements in slipperiness, anti-blocking property and adhesiveness. Needless to say, the base film may contain the above-described coating composition to be formed on the base film (including recycled pellets prepared by recycling the polyester film having good adhesiveness according to the present invention).

The thus obtained polyester film having good adhesiveness has a good winding property and slitting property. Thus, by applying a coating liquid on the coating layer, the film may suitably be applied to various uses such as a base film for magnetic recording materials; base film for printing with various inks such as ink for cellophane, ink for offset printing and ink cured by UV; a base film for easily adhering electronic photograph toner, for easily adhering chemical mat coating composition, for easily adhering diazo coating composition and for coating with inorganic materials such as for vapor deposition.

The methods for measuring and evaluating the characteristics relating to the present invention will now be described.

(1) Intrinsic Viscosity [$\eta$]

Intrinsic viscosity was measured using o-chlorophenol as a solvent at 25°C.

(2) Water-solubility of Copolymerized Polyester

In 100 g of water, 2 g of copolymerized polyester was placed and the mixture was stirred at 60°C for 2 hours. After cooling, the resultant was filtered through a 2 $\mu$m filter. Based on the state of dissolution and on the amount of filtered out materials, the water-solubility was evaluated.

$\bigcirc$: Aqueous solution is clear or slightly cloudy and substantially no filtered out materials are observed.
$\Delta$: Aqueous solution is little cloudy and filtered out materials are observed.
X: The copolymerized copolymer is hard to be dissolved or the aqueous solution is strongly cloudy and a large amount of filtered out materials were observed.

(3) Adhesion

An aqueous solution of copolymerized polyester and wax(es) was applied to a polyester base film. To the formed layer for giving good adhesion, a coating composition containing 100 parts by weight of a magnetic coating composition (Daiferacoat CAD-4301, commercially available from Dainichi Seika Kogyo) and 1 part by weight of a curing agent Sumijoule N75 (commercially available from Sumitomo Bayer) was applied to a thickness of 5 $\mu$m (after drying) with a bar coater, followed by drying the resultant at 100°C for 5 minutes to form a coating layer. On the other hand, on PET films (50 $\mu$m), an adhesive Seikabond (E270/C-26=10/2 (weight ratio)) was applied to a thickness of 8 $\mu$m after drying with a bar coater and the resulting films were dried at 60°C for 1 minute to form a coating layer. Between the thus obtained a pair of PET base films coated with the adhesive, the above-mentioned sample coated with the magnetic coating composition was clamped and the resultant was pressed with a roller so as to assure that bubbles are not incorporated. The resultant was moved back and forth once between a pair of press rolls of a laminater, whose surface temperature was 100°C. The resulting sample was aged at 40°C for not less than 48 hours, followed by slitting the sample into strips having a width of 15 mm. The layer for giving good adhesion and the magnetic composition coating layer were peeled off with an angle of 90° using a Tensilone stretching tester (stretching rate: 200 mm/min) and the adhesion force between the layers was measured, which was classified according to the following criteria:

⊚   not less than 250 g/15 mm width
○:   not less than 200 g/15 mm width and less than 250 g/15 mm width.
Δ:   not less than 150 g/15 mm width and less than 200 g/15 mm width
X:   less than 150 g/15 mm width

(4) Anti-static Property

A polyester film on which a layer for giving good adhesion was not laminated was wound about the surface of a metal drum. While rotating this drum, a film on which a layer for giving good adhesion was laminated was contacted with the film wound about the rotating drum for 5 seconds such that a load of 2.5 N (255 g) is applied to an edge of the layer for giving good adhesion. Immediately thereafter, the electric potential of the film was measured by an electrostatic force-measuring apparatus, and anti-static property was evaluated based thereon.

○:   electric charge of not less than +3 kV and less than + 7 kV
Δ:   electric charge of not less than 0 kV and less than +3 kV
X:   electric charge of less than 0 kV (i.e., negative charge) or not less than +7 kV

Electrostatic force-measuring apparatus: Statiron TH type, commercially available from Shishido Seidenki
Measured distance: 50 mm from the head opening
Metal drum roll: size: 65 mm width x 150 mmϕ revolution: 860 rpm
Measured sample: 30 mm width x 300 mm length

(5) Anti-blocking Property

On the layer for giving good adhesion of a film, a biaxially oriented PET film was overlapped (overlapping area: 3 cm x 4 cm) and a load of 500 g/12 cm$^2$ was applied thereto. The resultant was left to stand at 40°C, 80% RH for 24 hours, and the shearing stress of the overlapped area was measured by Tensilone stretching tester at a stretching rate of 20 cm/min. Based on the measured stress, the anti-blocking property was evaluated according to the following criteria:

⊚   0 kg/cm$^2$ (does not block at all)
○:   0.1 kg/cm$^2$ to not more than 1 kg/cm$^2$
Δ:   1 kg/cm$^2$ to not more than 3 kg/cm$^2$
X:   not less than 3 kg/cm$^2$

(6) Slipperiness (static coefficient of friction μs, dynamic coefficient of friction μd)

Static coefficient of friction us and dynamic coefficient of friction ud between films were measured in accordance with ASTM-D-1894-63 using surface measuring apparatus HEIDON-14DR commercially available from Shinto Kagaku. The measurement conditions were as follows: sample moving velocity: 200 mm/min; load: 200 g; contact area: 63.5 mm x 63.5 mm. The measurement results were recorded and analyzed by Analyzing Recorder TYPE: HEIDON 3655E-99, which was evaluated according to the following criteria:

○:   μs = less than 0.8
Δ:   μs = not less than 0.8 and less than 1.3
X:   μs = not less than 1.3

(7) Shaving Resistance

A polyester film having good adhesion was sampled to a size of 30 cm length x 12.7 mm (1/2 inch) width. A blade was pushed into the sample at right angles by 0.5 mm from the surface of the film. Under this condition, the sample was made to run under a load of 500 g/12.7 mm (0.5 inch) at a velocity of 2 m/min. The height of the powder shaved by the blade, which was attached to the blade was measured with a microscope (x160 magnification). The cases wherein the height of the shaved powder is less than 2 μm was classified into (⊚), 2 μm to less than 4 μm was classified into (O), and not less than 4 μm was classified into (X). Needless to say, the smaller the height of the attached powder, the better the shaving resistance.

(8) Solvent Resistance

An applicator was impregnated with an equivolume mixture of MEK/THF (methylethyl ketone/tetrahydrofuran) and the layer for giving good adhesiveness of a polyester film was rubbed with the applicator under a load of 0.49 N (50g) film was rubbed with the applicator under a load of such that the applicator moved back and forth 10 times. Based on the remaining area of the layer for giving good adhesiveness, the solvent resistance was evaluated according to the following criteria:
(remaining area of the layer for giving good adhesiveness)

not less than 90%              : ○
70% to less than 90%          : Δ
not more than 70%             : X

(9) Thickness of Coating Layer

Using a transmission electron microscope HU-12 commercially available from Hitachi, Ltd., an ultra-thin section of the laminated film was observed and the thickness of the coating layer was measured.

(10) Surface Roughness

Average surface roughness Ra was measured in accordance with JIS-B-0601 using a pin touch type surface roughness meter commercially available from Kosaka Kenkyujo with a cut off value of 0.025 mm and a measured length of 4 mm.
The present invention will now be described by way of examples. However, the examples are presented for the illustration purpose only and should not be interpreted in any restrictive way.

Example 1

Seventy one parts by weight of dimethyl terephthalate, 15 parts by weight of dimethyl 5-sodium sulfoisophthalate, 50.0 parts by weight of ethylene glycol, 6.0 parts by weight of diethylene glycol, 21 parts by weight of polyethylene glycol having a number average molecular weight of 600, 0.1 part by weight of calcium acetate, 0.3 parts by weight of lithium acetate and 0.03 parts by weight of antimony trioxide were mixed to carry out ester-exchange reaction according to a conventional method and then 0.05 parts by weight of trimethyl phosphate was added to the reaction product. The polycondensation reaction was carried out while gradually raising the temperature and gradually reducing the pressure to final conditions of 280°C, 1 mmHg, to obtain a water-soluble copolymerized polyester. The composition of the obtained water-soluble copolymerized polyester was measured by NMR (13C-NMR spectrum). As a result, the acid component comprised 87.5 mol% of terephthalic acid and 12.5 mol% of 5-sodium sulfoisophthalic acid, and the glycol component comprised 95 mol% of ethylene glycol and 5 mol% of diethylene glycol. The content of polyethylene glycol was 15% by weight and the intrinsic viscosity was 0.83 dl/g.
In 100 g of water, the obtained 2 g of copolymerized polyester was placed and the mixture was stirred at 60°C for 2 hours. After cooling, the mixture was filtered through a 2 μm filter to obtain an aqueous solution of the copolymerized polyester with a concentration of 2% by weight. The aqueous solution of the copolymerized polyester was substantially transparent and no filtered out materials were observed.
On the other hand, as for the wax to be mixed with the copolymerized polyester, oxidized wax having a solid content of 2% by weight was added to the aqueous copolymerized polyester solution in an amount of 10% by weight and the mixture was well stirred to obtain a coating solution employed in the present invention.

(composition of coating composition)

    1) copolymerized polyester      90 parts by weight
    2) wax oxidized wax      10 parts by weight

To prepare an aqueous dispersion of the above-mentioned oxidized wax, 1 part by weight each of a phosphoric acid ester, ammonium oleate and 2-amino-2-methylpropanol were added, the mixture was strongly stirred in water, and the mixture was further dispersed by an ultrasonic disperser to obtain an aqueous dispersion having a total solid content of 2% by weight.

On the other hand, a polyethylene terephthalate containing 0.2% by weight of silicon dioxide particles having an average particle size of 0.2 μm and having an intrinsic viscosity of 0.65 was sufficiently dried and supplied to an extruder. After melting the polyester at 280°C and filtering the melt through a sintered metal filter having a cut off size of 10 μm, the polyester was extruded in the form of a sheet from a T-shaped die and the sheet was wound about a cooling drum having a surface temperature of 30°C, thereby cooling and solidifying the sheet. In order to increase the adhesion between the sheet and the surface of the cooling drum, a wire electrode was arranged on the sheet and a direct voltage of 6000 V was applied. The thus obtained non-oriented PET film was stretched in the longitudinal direction at 95°C at a stretching ratio-of 3.5 times the original length to obtain a uniaxially oriented film. Corona discharge treatment was performed in the air on one surface of this film and the coating composition having the above-mentioned composition was applied to the treated surface of the film by the gravure coating method to a thickness after biaxial stretching of 0.04 μm. The coated uniaxially oriented film was introduced into a tenter and well dried at 110°C in a preliminary heating step. Then while clamping the film with a clip, the film was stretched in the transverse direction at a stretching ratio of 3.5 times the original length at 120°C. The film was then heat set at 210°C for 5 seconds to obtain a polyester film having good adhesiveness. The thickness of the layer on the polyester base film was 0.04 μm and the thickness of the film was 10 μm. The characteristics of the obtained film are shown in Table 2. This film excelled in anti-static property, slipperiness, adhesion with magnetic coating composition, anti-blocking property, surface smoothness, shaving resistance and solvent resistance.

Example 2

The same procedure as in Example 1 was repeated except that the acid component comprised 87.5 mol% of terephthalic acid and 12.5 mol% of 5-sodium sulfoisophthalic acid, the glycol component comprised 94 mol% of ethylene glycol and 6 mol% of diethylene glycol, the content of polyethylene glycol was 20% by weight and that the intrinsic viscosity was 0.85 dl/g. In the same manner as in Example 1, an aqueous solution of the water-soluble copolymerized polyester having a concentration of 2% by weight was prepared. In the same manner as in Example 1 except that the type of the added wax and the mixing ratio were changed as described below, a polyester film having a good adhesiveness, in which the thickness of the layer on the polyester base film was 0.04 μm and the thickness of the film was 10 μm was obtained.

(composition of coating composition)

    1) Water-soluble copolymerized polyester      94 wt parts
    2) Wax
    (a) oxidized wax      65 wt parts
    (b) rosin-modified wax      35 wt parts      6 wt parts

The rosin-modified wax was an ester compound of {hydrogenated rosin · α,β-substituted ethylene (α substituent: carboxyl, β substituent: methyl)adduct} alkyl ($C_6$) poly(number of repeating units: 5) alcohol. To disperse the above-mentioned (a) + (b) in water, a nonionic surfactant, phosphoric acid ester, ammonium oleate and 2-amino-2-methylpropanol were added in an amount of 1% by weight each, the components were strongly stirred in water, and the mixture was further dispersed by an ultrasonic disperser to obtain an aqueous dispersion having a total solid content of 2.0% by weight. The characteristics of the obtained polyester film having good adhesiveness are shown in Table 2. As shown, all characteristics were excellent.

Comparative Example 1

Using the water-soluble copolymerized polyester having the same composition as that used in Example 2 as the water-soluble copolymerized polyester, an aqueous copolymerized polyester solution having a concentration of 2% by weight was obtained. The aqueous solution of the water-soluble copolymerized polyester was substantially transparent and no filtered out materials were observed.

Using this coating composition alone without mixing with a wax, a polyester film having good adhesiveness in which the thickness of the layer was 0.04 μm and the thickness of the film was 10 μm was obtained by the same method as in Example 1. The characteristics of the obtained polyester film having good adhesiveness are shown in Table 2. As shown, the film was poor in slipperiness and so on.

Examples 3 - 5, Comparative Example 2

Using the water-soluble copolymerized polyester having a concentration of 2% by weight and a wax having a concentration of 2% by weight which are shown in Table 1, polyester films having good adhesiveness shown in Table 2, in which the thickness of the layer was 0.04 μm and the thickness of the film was 10 μm were prepared by the same method as in Example 1.

The films of Examples 3 - 5 are within the scope of the present invention, and all of anti-static property, slipperiness, adhesiveness, anti-blocking property, shaving resistance and solvent resistance were good.

On the other hand, the film of Comparative Example 2 is outside the scope of the present invention, and the film had poor adhesion, anti-blocking property, slipperiness and so on.

Comparative Example 3

As shown in Table 1, a water-soluble copolymerized polyester was obtained in which the acid component comprised 87.5 mol% of terephthalic acid and 12.5 mol% of 5-sodium sulfoisophthalic acid, and the glycol component comprised 94 mol% of ethylene glycol and 6 mol% of diethylene glycol. The content of polyethylene glycol was 0.5% by weight and the intrinsic viscosity was 0.63 dl/g.

To this coating composition, oxidized wax was added in an amount of 20% by weight and a polyester film having good adhesiveness, in which the thickness of the layer was 0.04 μm and the thickness of the film was 10 μm was obtained. The characteristics of the obtained polyester film having good adhesiveness are shown in Table 2. As shown, the film was poor in anti-static property, adhesion and so on.

Comparative Example 4

As shown in Table 1, a water-soluble copolymerized polyester was obtained in which the acid component comprised 87.5 mol% of terephthalic acid and 12.5 mol% of 5-sodium sulfoisophthalic acid, and the glycol component comprised 90 mol% of ethylene glycol and 10 mol% of diethylene glycol. The content of polyethylene glycol was 45% by weight and the intrinsic viscosity was 0.93 dl/g.

To this coating composition, oxidized wax was added in an amount of 15% by weight and a polyester film having good adhesiveness, in which the thickness of the layer was 0.04 μm and the thickness of the film was 10 μm was obtained. The characteristics of the obtained polyester film having good adhesiveness are shown in Table 2. As shown, the film was poor in anti-static property, slipperiness and so on.

Example 6

As shown in Table 1, a water-soluble copolymerized polyester was obtained in which the acid component comprised 87.5 mol% of terephthalic acid and 12.5 mol% of 5-sodium sulfoisophthalic acid, and the glycol component comprised 78 mol% of ethylene glycol and 22 mol% of diethylene glycol. The content of polyethylene glycol was 20% by weight and the intrinsic viscosity was 0.73 dl/g.

To this coating composition, oxidized wax was added in an amount of 10% by weight and a polyester film having good adhesiveness, in which the thickness of the layer was 0.04 μm and the thickness of the film was 10 μm was obtained. The characteristics of the obtained polyester film having good adhesiveness are shown in Table 2. As shown, the film was little bit poor in anti-blocking property and slipperiness.

Example 7

As shown in Table 1, a water-soluble copolymerized polyester was obtained in which the acid component comprised 87.5 mol% of terephthalic acid and 12.5 mol% of 5-sodium sulfoisophthalic acid, and the glycol component comprised 97 mol% of ethylene glycol and 3 mol% of diethylene glycol. The content of polyethylene glycol was 20% by weight and the intrinsic viscosity was 0.86 dl/g.

This copolymerized polyester was little bit poor in water-solubility. To this coating composition, oxidized wax was added in an amount of 15% by weight and a polyester film having good adhesiveness, in which the thickness of the layer was 0.04 μm and the thickness of the film was 10 μm was obtained. The characteristics of the obtained polyester film having good adhesiveness are shown in Table 2. As shown, the film was little bit poor in shaving resistance and slipperiness.

Example 8

The same procedure as in Example 1 was repeated except that the water-soluble copolymerized polyester and the oxidized wax were admixed with the polyethylene terephthalate, to obtain a polyester film having good adhesiveness, in which the thickness of the layer was 0.04 μm and the thickness of the film was 10 μm. More particularly, a mixture of 90 parts by weight of the water-soluble copolymerized polyester in which the acid component comprised 87.5 mol% of terephthalic acid and 12.5 mol% of 5-sodium sulfoisophthalic acid, and the glycol component comprised 97 mol% of ethylene glycol and 3 mol% of diethylene glycol and 10 parts by weight of oxidized wax was admixed with the polyethylene terephthalate in an amount of 10% by weight. As the coating composition, a composition in which the ratio of the water-soluble copolymerized polyester/oxidized wax was 90/10 was used. The characteristics of the thus obtained film are shown in Table 2. As can be seen, the slipperiness, anti-blocking property and adhesion are promoted by admixing sodium sulfonate, polyethylene glycol and oxidized wax in the base film.

Example 9

Ethylene glycol and dimethyl naphthalene 2,6-dicarboxylate were subjected to ester-exchange reaction and then polycondensed, followed by producing chips of polyethylene 2,6-naphthalate (2,6-PEN) having an intrinsic viscosity of 0.67. The ester-exchange reaction was carried out using calcium acetate as a catalyst, at 200 - 230°C for 7 hours. The polycondensation reaction was carried out using antimony trioxide at 280 - 300°C for 3 hours. To the obtained chips, 0.2% by weight of silicon dioxide particles having an average particle size of 0.2 μm were incorporated, and the chips were well dried, and supplied to an extruder. After melting the polyester at 300°C and filtering the melt through a sintered metal filter having a cut off size of 10 μm, the polyester was extruded in the form of a sheet from a T-shaped die and the sheet was wound about a cooling drum having a surface temperature of 30°C, thereby cooling and solidifying the sheet. In order to increase the adhesion between the sheet and the surface of the cooling drum, a wire electrode was arranged on the sheet and a direct voltage of 6000 V was applied. The thus obtained non-oriented 2,6-PEN film was stretched in the longitudinal direction between rolls heated at 140°C at a stretching ratio of 4.0 times the original length to obtain a uniaxially oriented film. Corona discharge treatment was performed in the air on one surface of this film and the coating composition as used in Example 1 was applied to the treated surface of the film by the gravure coating method to a thickness after biaxial stretching of 0.04 μm. The coated uniaxially oriented film was introduced into a tenter and stretched in the transverse direction at a stretching ratio of 4.0 times the original length at 130°C. The film was then heat set at 215°C for 5 seconds to obtain a polyester film having good adhesiveness. The thickness of the layer on the polyester base film was 0.04 μm and the thickness of the film was 10 μm. The characteristics of the obtained film are shown in Table 2. This film excelled in anti-static property, slipperiness, adhesion with magnetic coating composition, anti-blocking property, shaving resistance, solvent resistance and surface smoothness.

INDUSTRIAL APPLICABILITY

As described above, the polyester film having good adhesiveness according to the present invention has excellent anti-static property, slipperiness, water-solubility, anti-blocking property, shaving resistance and solvent resistance. Thus, the film may be suitably used for magnetic recording media, various photograph materials, wrapping materials, electric insulating materials, general industrial materials and the like. The film is especially suited as a base film of magnetic recording media.

Table 1

| | Composition of Water-soluble copolymerized polyester (mol%) | Amount of Added Polyoxy-alkylene glycol (wt% based on polyester) | Type of added wax (B) and mixing ratio (parts by weight) | (A)/(B) ratio (parts by weight) |
|---|---|---|---|---|
| | (A) | | | |
| Example 1 | TPA /SSIA ‖ EG/DEG 87.5/12.5 ‖ 95/5 | PEG-600 15 | oxidized wax 100 | 90/10 |
| Example 2 | TPA /SSIA ‖ EG/DEG 87.5/12.5 ‖ 94/6 | PEG-600 20 | oxidized wax 65 rosin-modified wax 35 | 94/6 |
| Example 3 | TPA /SSIA ‖ EG/DEG 87.5/12.5 ‖ 97/3 | PEG-600 10 | oxidized wax 65 rosin-modified wax 35 | 85/15 |
| Example 4 | TPA /SSIA ‖ EG/DEG 87.5/12.5 ‖ 90/10 | PEG-600 30 | oxidized wax 100 | 85/15 |
| Example 5 | TPA /SSIA ‖ EG/DEG 87.5/12.5 ‖ 95/5 | PEG-600 20 | carnauba wax 100 | 93/ 7 |
| Example 6 | TPA /SSIA ‖ EG/DEG 87.5/12.5 ‖ 78/22 | PEG-600 20 | oxidized wax 100 | 90/10 |
| Example 7 | TPA /SSIA ‖ EG/DEG 87.5/12.5 ‖ 97/3 | PEG-600 32 | oxidized wax 100 | 85/15 |
| Example 8 | TPA /SSIA ‖ EG/DEG 87.5/12.5 ‖ 97/3 | PEG-600 15 | oxidized wax 100 | 90/10 |
| Example 9 | TPA /SSIA ‖ EG/DEG 87.5/12.5 ‖ 95/5 | PEG-600 15 | oxidized wax 100 | 90/10 |

footnote: TPA: terephthalic acid; DEG: diethylene glycol; SSIA: 5-sodium sulfoisophthalic acid
PEG: polyethylene glycol; EG: ethylene glycol

Table 1 (continued)

| | (A) | | Type of added wax (B) and mixing ratio (parts by weight) | (A)/(B) ratio (parts by weight) |
|---|---|---|---|---|
| | Composition of Water-soluble copolymerized polyester (mol%) | Amount of Added Polyoxy-alkylene glycol (wt% based on polyester) | | |
| Comparative Example 1 | TPA /SSIA ‖ EG/DEG 87.5/12.5 ‖ 94/6 | PEG-600    20 | − | 100/0 |
| Comparative Example 2 | TPA /SSIA ‖ EG/DEG 87.5/12.5 ‖ 94/6 | PEG-600    15 | paraffin wax    100 | 93/7 |
| Comparative Example 3 | TPA /SSIA ‖ EG/DEG 87.5/12.5 ‖ 97/3 | PEG-600    0.5 | oxidized wax    100 | 80/20 |
| Comparative Example 4 | TPA /SSIA ‖ EG/DEG 87.5/12.5 ‖ 90/10 | PEG-600    45 | oxidized wax    100 | 85/15 |

footnote: TPA: terephthalic acid; DEG: diethylene glycol; SSIA: 5-sodiumsulfoisophthalic acid
PEG: polyethylene glycol; EG: ethylene glycol

EP 0 696 502 B1

Table 2

| | Adhesion with magnetic coating composition | Anti-static Property | Anti-blocking Property | Slipperiness (HEIDON) (coated/non-coated surface) | Shaving Resistance | Solvent Resistance |
|---|---|---|---|---|---|---|
| Example 1 | ○ | ○ | ○ | ○ | ◎ | ○ |
| Example 2 | ○ | ○ | ○ | ○ | ◎ | ○ |
| Example 3 | ○ | ○ | ○ | ○ | ◎ | ○ |
| Example 4 | ◎ | ○ | ○ | ○ | ◎ | ○ |
| Example 5 | ○ | ○ | ○ | △ | ◎ | ○ |
| Example 6 | ◎ | ○ | △ | △ | ○ | ○ |
| Example 7 | ○ | ○ | ○ | △ | ○ | ○ |
| Example 8 | ○ | ○ | ◎ | ○ | ◎ | ○ |
| Example 9 | ○ | ○ | ◎ | ○ | ◎ | ○ |
| Comparative Example 1 | ○ | ○ | △ | X | ○ | ○ |
| Comparative Example 2 | X | ○ | △ | △ | ○ | △ |
| Comparative Example 3 | △ | X | ○ | ○ | X | X |
| Comparative Example 4 | △ | X | ○ | X | X | X |

EP 0 696 502 B1

## Claims

1. A polyester film comprising a polyester base film and a layer formed on at least one surface of the polyester base film, which layer contains a mixture in an amount of not less than 80% by weight of the layer of a copolymerised polyester and an oxidised wax and/or a natural wax, the copolymerised polyester including an acid component having an alkaline sulfonate base in an amount of 5-40 mol% based on total acid components and as a copolymerised glycol component an ethylene glycol oligomer in an amount of 1 - 20 mol% based on total glycol components (excluding polyoxyalkylene glycol component described below), the ethylene glycol oligomer having a polymerisation degree of 2 - 8; the copolymerised polyester further including a polyoxyalkylene glycol having a number average molecular weight of 400 - 10,000 in an amount of not less than 1% by weight and less than 40% by weight based on the copolymerised polyester; the oxidised wax and/or natural wax being present in an amount of 0.1 - 30% by weight based on the total of the copolymerised polyester and the oxidised wax and/or natural wax.

2. The polyester film according to claim 1, wherein said copolymerised polyester is a water-soluble or water-dispersible copolymerised polyester.

3. The polyester film according to claim 1 or claim 2, wherein said ethylene glycol oligomer is diethylene glycol.

4. The polyester film according to any preceding claim, wherein the content (A% by weight) of said polyoxyalkylene glycol in said copolymerised polyester and the content (B mol%) of said ethylene glycol oligomer satisfy the following equation (I):

$$1 \leq A/B \leq 10 \tag{I}$$

5. A polyester film according to any one of claims 1 - 4, wherein the polyoxyalkylene glycol component is polyethylene glycol.

6. The polyester film according to any one of claims 1 - 5, wherein said copolymerised polyester is one obtained by adding said polyoxyalkylene glycol in any step of production process of said copolymerised polyester.

7. The polyester film according to any one of claims 1 - 5, wherein said copolymerised polyester is one obtained by first producing a copolymerised polyester and then mixing said polyoxyalkylene glycol in a melted condition with the copolymerised polyester.

8. The polyester film according to any one of claims 1 - 7, wherein said polyester base film is made of a polyester composition containing the copolymerised polyester and the oxidised wax and/or natural wax as defined in any one of claims 1 - 7.

9. The polyester film according to any one of claims 1 - 7, wherein the polyester constituting said polyester base film is polyethylene terephthalate or polyethylene naphthalate.

## Patentansprüche

1. Polyesterfilm, umfassend einen Polyester-Basisfilm und eine auf zumindest einer Oberfläche des Polyester-Basisfilms ausgebildete Schicht, die ein Gemisch in einer Menge von nicht weniger als 80 Gew.-% der Schicht aus einem copolymerisierten Polyester und einem oxidierten Wachs und/oder einem Naturwachs enthält, wobei der copolymerisierte Polyester eine Säurekomponente umfasst, die eine Alkalimetallsulfonat-Base in einer Menge von 5 bis 40 Mol-%, bezogen auf die Gesamtheit der Säurekomponenten, sowie als copolymerisierte Glykolkomponente ein Ethylenglykol-Oligomer in einer Menge von 1 bis 20 Mol-%, bezogen auf die Gesamtheit der Glykolkomponenten (mit Ausnahme der nachstehend beschriebenen Polyoxyalkylenglykol-Komponente), wobei das Ethylenglykol-Oligomer einen Polymerisationsgrad von 2 bis 8 aufweist; wobei der copolymerisierte Polyester weiters ein Polyoxyalkylenglykol mit einem zahlenmittleren Molekulargewicht von 400 bis 10.000 in einer Menge von nicht weniger als 1 Gew.-% und weniger als 40 Gew.-%, bezogen auf den copolymerisierten Polyester, umfasst; wobei das oxidierte Wachs und/oder Naturwachs in einer Menge von 0,1 bis 30 Gew.-%, bezogen auf die Gesamtmenge von copolymerisiertem Polyester und oxidiertem Wachs und/oder Naturwachs, enthalten ist.

**2.** Polyesterfilm nach Anspruch 1, worin der copolymerisierte Polyester ein wasserlöslicher oder wasserdispergierbarer copolymerisierter Polyester ist.

**3.** Polyesterfilm nach Anspruch 1 oder 2, worin das Ethylenglykol-Oligomer Diethylenglykol ist.

**4.** Polyesterfilm nach einem der vorangegangenen Ansprüche, worin der Gehalt (A Gew.-%) des Polyoxyalkylenglykols im copolymerisierten Polyester und der Gehalt (B Mol-%) des Ethylenglykol-Oligomers der folgenden Gleichung (I) entspricht:

$$1 \leq A/B \leq 10 \tag{I}.$$

**5.** Polyesterfilm nach einem der Ansprüche 1 bis 4, worin die Polyoxyalkylenglykol-Komponente Polyethylenglykol ist.

**6.** Polyesterfilm nach einem der Ansprüche 1 bis 5, worin der copolymerisierte Polyester einer ist, der durch Zugabe des Polyoxyalkylenglykols in einer beliebigen Stufe des Herstellungsverfahrens des copolymerisierten Polyesters erhalten wird.

**7.** Polyesterfilm nach einem der Ansprüche 1 bis 5, worin der copolymerisierte Polyester einer ist, der erhalten wird, indem zunächst ein copolymerisierter Polyester gebildet und dann das Polyoxyalkylenglykol in geschmolzenem Zustand mit dem copolymerisierten Polyester vermischt wird.

**8.** Polyesterfilm nach einem der Ansprüche 1 bis 7, worin der Polyester-Basisfilm aus einer Polyester-Zusammensetzung gebildet wird, die den copolymerisierten Polyester und das oxidierte Wachs und/oder Naturwachs, wie in einem der Ansprüche 1 bis 7 definiert, enthält.

**9.** Polyesterfilm nach einem der Ansprüche 1 bis 7, worin der Polyester, der den Polyester-Basisfilm bildet, Polyethylenterephthalat oder Polyethylennaphthalat ist.

**Revendications**

**1.** Un film de polyester comprenant un film de base en polyester et une couche formée sur au moins une surface du film de base de polyester, ladite couche contient un mélange dans une proportion de pas moins de 80 % en poids de la couche d'un polyester copolymérisé et une cire oxydée et/ou une cire naturelle, le polyester copolymérisé incluant un composant acide ayant une base sulfonate alcaline dans une proportion de 5 - 40 mol% basée sur les composants acides totaux et comme composant de glycol copolymérisé, un oligomère d'éthylène glycol dans une proportion de 1 - 20 mol% basée sur la totalité des composants de glycol (à l'exclusion du composant de polyalkylène glycol décrit en dessous), l'oligomère d'éthylène glycol ayant un degré de polymérisation de 2 - 8 ; le polyester copolymérisé incluant de plus un polyoxyalkylène glycol ayant un poids moléculaire moyen en nombre de 400 - 10000 dans une proportion de pas moins de 1 % en poids et moins de 40 % en poids basé sur le polyester copolymérisé ; la cire oxydée et/ou la cire naturelle étant présente dans une proportion de 0,1 - 30 % en poids basé sur la totalité du polyester copolymérisé et de la cire oxydée et/ou cire naturelle.

**2.** Le film de polyester selon la revendication 1, où ledit polyester copolymérisé est un polyester copolymérisé soluble dans l'eau ou dispersible dans l'eau.

**3.** Le film de polyester selon la revendication 1 ou la revendication 2, où ledit oligomère d'éthylène glycol est du diéthylène glycol.

**4.** Le film de polyester selon l'une quelconque des revendications précédentes, où le contenu (A % en poids) dudit polyalkylène glycol dans ledit polyester copolymérisé et le contenu (B mol%) dudit oligomère d'éthylène glycol satisfont l'équation (I) suivante :

$$1 \leq A/B \leq 10 \tag{I}.$$

**5.** Un film de polyester selon l'une quelconque des revendications 1 - 4, où le composant de polyalkylène glycol est du polyéthylène glycol.

6. Le film de polyester selon l'une quelconque des revendications 1 - 5, où ledit polyester copolymérisé est obtenu par ajout dudit polyoxyalkylène glycol dans n'importe quelle étape du procédé de production dudit polyester copolymérisé.

7. Le film de polyester selon l'une quelconque des revendications 1 - 5, où ledit polyester copolymérisé est obtenu par la production dans un premier temps d'un polyester copolymérisé et ensuite par le mélange dudit polyoxyalkylène glycol dans une condition de fusion avec le polyester copolymérisé.

8. Le film de polyester selon l'une des revendications 1 - 7, où ledit film de base de polyester est fait en une composition de polyester contenant le polyester copolymérisé et la cire oxydée et/ou la cire naturelle comme défini dans l'une quelconque des revendication 1 - 7.

9. Le film de polyester selon l'une quelconque des revendications 1 - 7, où le polyester constituant ledit film de base en polyester est du polyéthylène terephtalate ou du polyéthylène naphtalate.